# EUROPEAN PATENT SPECIFICATION

(11) **EP 1 800 531 B1**
(45) Date of publication and mention of the grant of the patent: **24.02.2016**
(21) Application number: 05425914.8
(22) Date of filing: 23.12.2005
(51) Int. Cl.: A01D 46/26

(54) **Tree shaking device for collecting fruits provided with an improved handgrip**
Baumschüttler zum Sammeln von Früchten mit einem verbesserten Handgriff
Dispositif pour secouer les arbres pour la collecte de fruits muni d'une poignée améliorée

(43) Date of publication of application: 27.06.2007
(73) Proprietor: ACTIVE srl, 26037 San Giovanni in Croce, Cremona (IT)
(72) Inventor: Griffini, Alberto, 26034 Pontirolo (CR) (IT)
(74) Representative: Robba, Pierpaolo

(56) References cited:
- EP-A- 0 906 721
- EP-A- 1 095 554
- EP-A- 1 369 022
- WO-A-2004/095909
- ES-A6- 2 021 986

## Description

The present invention relates to a tree shaking device for collecting fruits. In particular, the device according to the invention is advantageously employed for harvesting fruits such as olives, walnuts, hazelnuts and so on through shaking.

The known shaking devices provide for a rod equipped at its end with a hook adapted to engage a branch of a tree, this rod being partially contained within a housing and receiving a reciprocating motion along its axis through a kinematic linkage mechanism driven by a motor.

When the device is operating, it is often necessary to change the orientation of the hook in accordance with the arrangement of the different branches. For this purpose, the known machines provide for a joint connecting the rod portion carrying the hook and the rod portion coupled to the reduction gear, said joint allowing the rod portion carrying the hook to rotate around its axis in both directions through an angle of almost 360°.

A shaking device providing for an arrangement allowing the rotation of the hook engaging the branch is disclosed, for instance, in EP 1,095,554.

Nevertheless, in the known machines in order to change the orientation of the hook in accordance with the arrangement of the branch, it is necessary to stop the operation of the machine, remove the hand from the handgrip of the machine for rotating the rod by hand, then place again the hand on the handgrip and resume the operation of the machine. Moreover, since thanks to the connecting joint the rod portion carrying the hook is free to rotate around its axis, it often occurs that the hook itself, due to the reciprocating shaking motions, imparts a turning motion to the rod, with the consequent disengagement of the hook from the branch. This causes a waste of time for hooking again the branch and damages the bark of the branch itself.

EP 1,369,022, in the name of the Applicant, discloses a tree shaking device including a front handgrip consisting in a pair of sliding sleeves: a first, outer sleeve has an outer circular cross section and an inner polygonal cross section and it can slide on a second, inner sleeve, which in turn is fastened to the reciprocating rod; this second sleeve has an outer polygonal cross section, with a shape corresponding to the inner cross section of the first, outer sleeve, so that the first, outer sleeve can axially slide over the second, inner sleeve between a pair of end stoppers. Thanks to the coupling of the outer and inner sleeves, the user can turn the hook in the best orientation or anyhow prevent an unwanted rotation thereof without removing his hand from the handgrip, i.e. without stopping the operation of the device.

Nevertheless, even this solution does not appear to be optimumt

First of all, due to the above disclosed arrangement, the axial vibrations generated by the reciprocating stroke of the rod are entirely transferred to the handgrip and, through it, to the user.

Secondly, if the user removes his hand from the handgrip, this handgrip, due to inertia, tends to move to and fro between the end stoppers and to hit them violently.

WO 2004/095909 discloses a tree shaking device comprising a chassis and reciprocating rod carrying a hook at its distal end, wherein the operator can control the orientation of the hook without having to rotate the entire chassis. To this purpose, the tree shaking device comprises a rod-guiding member extending over the reciprocating rod and - at the distal end of this rod - a rotation-linking means for linking the rotation of said rod-guiding member to a rotation of the reciprocating rod and preventing relative rotation therebetween, while allowing the rod to effect its linear reciprocating movement in the axial direction.

An object of the present invention is to provide a tree shaking device equipped with an improved front handgrip, allowing the user to turn the hook carried by the reciprocating rod during operation without removing his hand from the handgrip, and, at the same time, reducing the transmission of vibrations from the reciprocating rod to the user.

This and other objects are achieved through a tree shaking device as claimed in the appended claims.

Thanks to the presence of a cursor integral to the reciprocating rod - or alternatively to the handgrip - of the shaking device according to the invention, which allows this rod to axially slide with respect to this handgrip, but, thanks to the presence of engagement surfaces, prevents the rotation of this rod with respect to this handgrip, the reciprocating rod can be driven in rotation by turning the handgrip, without removing the hand from this handgrip and without stopping the shaking device.

Moreover, again thanks to the presence of said cursor, the transmission of vibrations from the reciprocating rod to the user through the handgrip is substantially reduced.

According to a preferred embodiment of the invention, the aforesaid engagement surfaces are obtained by making at least one portion of the handgrip with a polygonal inner cross section and by accordingly making the cursor with a polygonal cross section. Advantageously, in correspondence with the end stoppers of the handgrip, damping means are provided for avoiding the shocks caused by axial vibrations, which otherwise would propagate to the handgrip.

A preferred embodiment of the present invention, given by way of non limiting example, will be disclosed more in detail hereinafter, with reference to the accompanying drawings, wherein:
- Figure 1 is a perspective view showing an embodiment of the tree shaking device according to the invention;
- Figure 2 is an exploded perspective view showing in detail the front handgrip of the shaking device of Figure 1;
- Figure 3 is a longitudinal section view of the front handgrip of Figure 2.

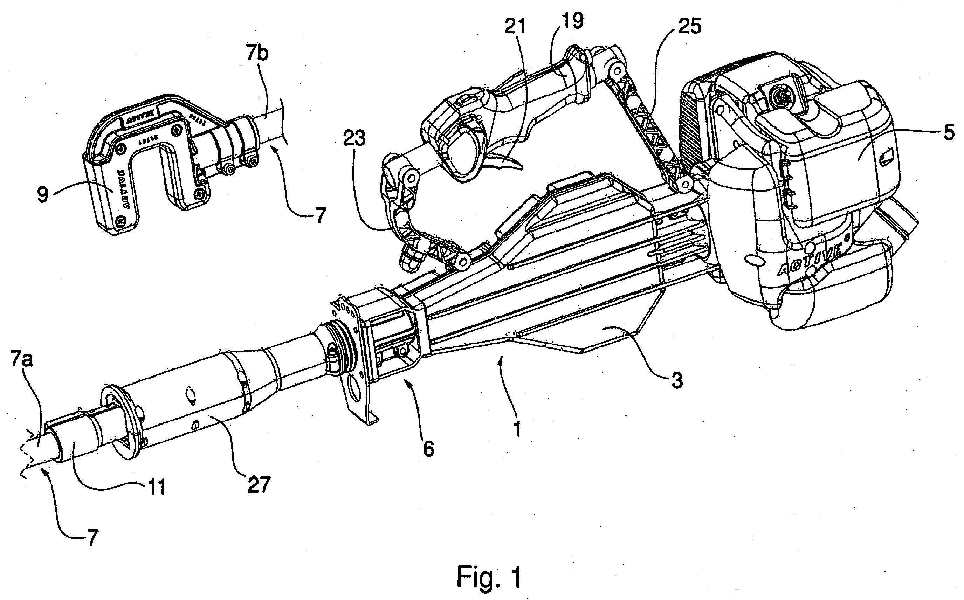

With reference to Figure 1, the tree shaking device 1 according to the invention includes a casing 3 housing inside it a reducing gear, which, driven by a motor 5, transfers the motion to a rod 7, thus allowing to impart a reciprocating motion to said rod.

The structure and operation of the reducing gear are carried out according to known prior art and consequently they will not be disclosed in detail.

The rod 7 comprises a first portion partially housed in the casing 3, said first portion receiving the motion from the reducing gear and being connected to said reducing gear through a connecting joint 6 which allows the rotation of the rod around its own axis, and a second portion 7b, which carries at its end a hook 9 for engaging the branch of a tree from which fruits are to be harvested, said first and second portions being connected through a linking joint 11.

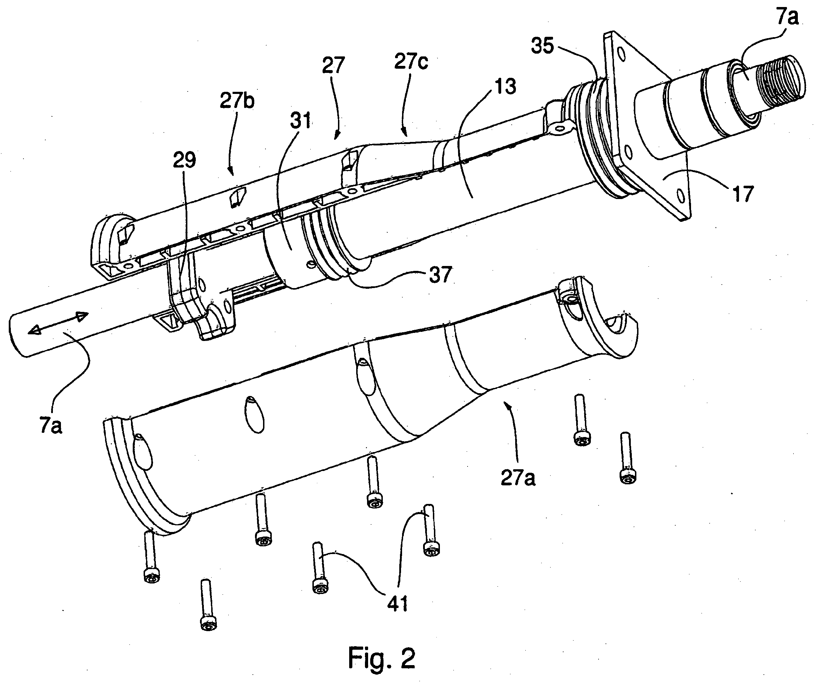

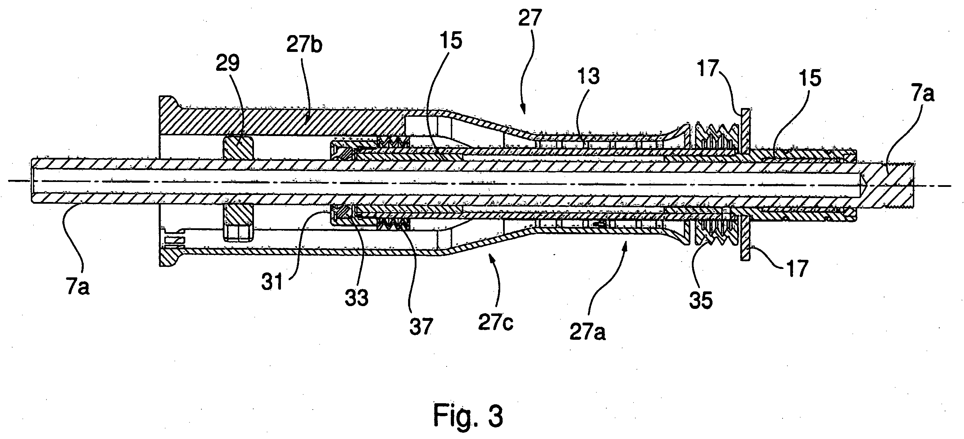

The first portion 7a of rod 7 can be seen in Figures 2 and 3, which show that said first rod portion 7a moves inside a hollow cylindrical guide 13. Said guide 13 is secured to casing 3, for instance through a plate 17 that is screwed on the front wall of casing 3, protrudes beyond casing 3 for partially covering the first portion 7a of rod 7 and ends with a nut 31 that contains a sealing ring 33 for said first portion 7a of rod 7. The motion of said first rod portion 7a relative to guide 13 is advantageously facilitated by brasses 15 interposed between the inner wall of guide 13 and the rod portion itself.

Turning back now to Figure 1, the shaking device 1 includes a rear handgrip 19, onto which control push buttons 21 of the shaking device are placed, this rear handgrip 19 connected to the casing 3 by a front arm 23 and a rear connecting rod 25.

Said shaking device 1 also comprises a front handgrip 27, shown in detail in Figures 2 and 3.

According to the invention, the front handgrip 27 consists in a shell having a substantially cylindrical profile and includes a first portion 27a having a smaller diameter and a second portion 27b having a greater diameter, joined by a frustoconical portion 27c.

The first portion 27a of the handgrip 27 has a circular inner cross section and it is fitted onto the guide 13, inside which the rod 7 slides. The second portion 27b of said handgrip, on the contrary, has a polygonal, for instance rectangular, inner cross section, it extends beyond nut 31, so as to directly surround the first portion 7a of rod 7 and inside it a cursor 29, fastened to said rod portion, freely slides, said cursor having a polygonal cross section corresponding to the inner cross section of the second handgrip portion 27b (rectangular in the illustrated example).

As it is evident from what disclosed above, the handgrip 27 can axially slide on guide 13 and it can rotate relative to said guide as well.

During operation, the cursor 29, fastened to the portion 7a of rod 7, slides inside the second portion 27b of the handgrip 27, while said handgrip 27 stays almost still.

Thanks to the presence of cursor 29, which allows a significant reduction of the contact surface between the vibrating rod and the front handgrip, the vibrations coming from the rod and transmitted to the handgrip and, through it, to the user are correspondingly reduced.

Moreover, thanks to the sliding coupling between the cursor 29 and the second portion 27b of the handgrip 27, the user can rotate in the desired way the first portion 7a of rod 7 - and with it the second portion 7b of said rod and the hook 9 - or rectify unwanted rotations thereof without being forced to remove the hand from the handgrip 27 and, therefore, without being forced to stop the operation of device 1.

It is evident that the inner cross section of the second portion 27b of the handgrip 27 and the cross section of the cursor 29 could have a shape different from rectangular, provided that they have engaging surfaces that avoid the relative rotation between the reciprocating rod and the handgrip.

It will be obviously possible to produce the portion 7a of the rod 7 and the cursor 29 as separate pieces and then secure to each other as well as directly manufacture said rod portion and said cursor from a unique piece, for instance through mechanical machining.

It is also evident that, even if the invention has been disclosed with reference to a preferred embodiment wherein the cursor is integral to a portion of the reciprocating rod, it will be also possible to make a cursor integral with the front handgrip of the shaking device and extending from the inner surface of said handgrip towards the reciprocating rod. In this case, it will be necessary to provide for a through-hole in said cursor for allowing the axial sliding motion of the rod relative to the handgrip, making sure to provide for engaging surfaces on the walls of said through-hole and of said reciprocating rod that prevent the relative rotation between the handgrip and the reciprocating rod itself.

Preferably, in order to avoid that, in case the user removes his hand from the handgrip 27, said handgrip is dragged by the motion of the rod 7 and violently hits the plate 17 or the nut 31, damping means, comprising for instance a pair of elastic plugs 35,37 are provided in correspondence of said plate and of said nut, respectively.

Advantageously, as shown in Figure 2, the handgrip 27 can be made in the shape of two semi-shells with substantially semi-circular cross section facing to each other and tightened to each other onto the guide 13 by transversal screws 41.

Furthermore, said front handgrip 27 preferably has an anti-slip outer cover made of elastomeric material for facilitating user's grip.

Finally, according to known prior art, the tree shaking device 1 according to the invention is provided with a strap or a shoulder harness (not shown) that is worn by the user, so that he can operate the device 1 with one hand through the control push buttons 21 provided on the rear handgrip 19, while he keeps the other hand on the front handgrip 27 for directing and rotating the reciprocating rod 7.

## Claims

1. A tree shaking device (1) comprising:
- a reciprocating rod (7) driven by a motor (5), moving of an axial reciprocating motion and provided at its end with a hook (9) for engaging the branch of a tree;
- a rear handgrip (19);
- a front handgrip (27) placed around said reciprocating rod (7), said rod (7) freely axially sliding relative to said front handgrip (27);
**characterised in that** said front handgrip (27) comprises a shell having substantially a cylindrical profile including a first portion (27a) having a smaller diameter and a second portion (27b) having a greater diameter, said first and second portions (27a,27b) of said front handgrip (27) being joined through a frustoconical portion (27c), **and in that** a cursor (29) integral to said rod (7) or to said front handgrip (27) is interposed between said front handgrip (27) and said reciprocating rod (7) and allows the relative sliding motion between said reciprocating rod (7) and said front handgrip (27), said cursor (29) comprising an engaging surface engaging said front handgrip (27) or said rod (7) that prevents the rotation between said rod (7) and said front handgrip (27), said cursor (29) being interposed between said front handgrip (27) and said rod at said second portion (27b) of said front handgrip (27) so as to reduce the transmission of vibrations from said rod (7) to said front handgrip (27).

2. The tree shaking device (1) according to claim 1, wherein during the axial reciprocating motion of said rod (7) said cursor (29) moves inside said handgrip (27).

3. The tree shaking device (1) according to claim 1 or 2, wherein said cursor (29) is obtained as a unique piece with said rod (7) or said handgrip (27).

4. The tree shaking device (1) according to claim 1, wherein said cursor (29) is integral to said reciprocating rod (7) and has a polygonal cross section and wherein said handgrip (27) includes at least one portion (27b) having a corresponding polygonal inner cross section.

5. The tree shaking device (1) according to claim 4, wherein said cursor (29) has a rectangular or square cross section and said at least one portion (27b) of said handgrip (27) has a rectangular or square inner cross section.

6. The tree shaking device (1) according to claim 1, comprising a casing (3) housing inside it a reducing gear, which can be driven by said motor (5), for transmitting said axial reciprocating motion to said reciprocating rod (7).

7. The tree shaking device (1) according to claim 6, further comprising a connecting joint (6) interposed between said reducing gear and said reciprocating rod (7) for allowing the rotation of said rod (7) around its own axis.

8. The tree shaking device (1) according to claim 6 or 7, wherein a hollow cylindrical guide (13) is provided, which is integral to said casing (3) and protrudes therebeyond for partially covering said rod (7), said rod (7) being guided by brasses (15) in its axial reciprocating motion inside said hollow cylindrical guide (13).

9. The tree shaking device (1) according to claim 8, wherein said hollow cylindrical guide (13) is secured to said casing (3) by screwing a plate (17) integral to said guide to the front wall of said casing, protrudes beyond said casing (3) for partially covering said rod (7) and ends with a nut (31) containing a sealing ring (33) for said rod.

10. The tree shaking device (1) according to claim 8 or 9, wherein said first portion (27a) of said handgrip (27) has a circular inner cross section and is fitted onto said hollow cylindrical guide (13).

11. The tree shaking device (1) according to any claim from 1 to 10, wherein said front handgrip (27) consists in two semi-shells having a substantially semi-circular cross section, tightened to each other, for instance by screws (41).

12. The tree shaking device (1) according to claim 9, wherein damping means (35,37) are provided on said guide (13), in correspondence with said plate (17) and said nut (31), respectively.

13. The tree shaking device (1) according to claim 12, wherein said damping means comprise elastic plugs (35,37).

14. The tree shaking device (1) according to any claim from 1 to 13, wherein said handgrip (27) has an anti-slip outer cover made of elastomeric material.

## Patentansprüche

1. Baumschüttler (1), umfassend:
- eine hin- und hergehende Stange (7), die von einem Motor (5) angetrieben ist, sich axial hin und her bewegt und an ihrem Ende mit einem Haken (9) zum Erfassen des Astes eines Baumes versehen ist;
- einen hinteren Handgriff (10);
- einen vorderen Handgriff (27), der um die genannte hin- und hergehende Stange (7) gelegt ist, wobei die genannte Stange (7) relativ zum genannten vorderen Handgriff (27) axial frei gleitet;
**dadurch gekennzeichnet, dass** der genannte vordere Handgriff (27) eine Schale aufweist, die im Wesentlichen ein zylindrisches Profil hat, das einen ersten Teil (27a), der einen kleineren Durchmesser hat, und einen zweiten Teil (27b), der einen größeren Durchmesser hat, aufweist, wobei der erste und der zweite Teil (27a, 27b) des genannten vorderen Handgriffs (27) durch einen kegelstumpfförmigen Teil (27c) verbunden sind, und
dadurch, dass ein mit der genannten Stange (7) oder mit dem genannten vorderen Handgriff (27) einstückiger Läufer (29) zwischen dem genannten vorderen Handgriff (27) und der genannten hin- und hergehenden Stange (7) angeordnet ist und die relative Gleitbewegung zwischen der genannten hin- und hergehenden Stange (7) und dem genannten vorderen Handgriff (27) zulässt, wobei der Läufer (29) eine mit dem genannten vorderen Handgriff (27) oder der genannten Stange (7) in Eingriff kommende Eingriffsfläche aufweist, die die Drehung zwischen der genannten Stange (7) und dem genannten vorderen Handgriff (27) verhindert, wobei der Läufer (29) an dem genannten zweiten Teil (27b) des genannten vorderen Handgriffs (27) zwischen dem vorderen Handgriff (27) und der genannten Stange angeordnet ist, um die Übertragung von Schwingungen von der genannten Stange (7) auf den genannten vorderen Handgriff (27) zu reduzieren.

2. Baumschüttler (1) nach Anspruch 1, wobei während des axialen Hin- und Hergangs der genannten Stange (7) der genannte Läufer (29) sich im Inneren des genannten Handgriffs (27) bewegt.

3. Baumschüttler (1) nach Anspruch 1 oder 2, wobei der genannte Läufer (29) als ein einziges Stück mit der genannten Stange (7) oder dem genannten Handgriff (27) erhalten wird.

4. Baumschüttler (1) nach Anspruch 1, wobei der genannte Läufer (29) mit der genannten hin- und hergehenden Stange (7) einstückig ist und einen polygonalen Querschnitt hat und wobei der genannte Handgriff (27) wenigstens einen Teil (27b) beinhaltet, der einen entsprechenden polygonalen Innenquerschnitt hat.

5. Baumschüttler (1) nach Anspruch 4, wobei der genannte Läufer (29) einen rechteckigen oder quadratischen Querschnitt hat und der genannte wenigstens eine Teil (27b) des genannten Handgriffs (27) einen rechteckigen oder quadratischen Innenquerschnitt hat.

6. Baumschüttler (1) nach Anspruch 1, der ein Gehäuse (3) aufweist, in dessen Innerem ein Untersetzungsgetriebe untergebracht ist, das von dem genannten Motor (5) angetrieben werden kann, um den genannten axialen Hin- und Hergang auf die genannte hin- und hergehende Stange (7) zu übertragen.

7. Baumschüttler (1) nach Anspruch 6, der ferner ein zwischen dem genannten Untersetzungsgetriebe und der genannten hin- und hergehenden Stange angeordnetes Gelenk (6) zum Zulassen der Drehung der genannten Stange (7) um ihre eigene Achse aufweist.

8. Baumschüttler (1) nach Anspruch 6 oder 7, wobei eine hohlzylindrische Führung (13) vorgesehen ist, die mit dem genannten Gehäuse (3) einstückig ist und über dieses hinaus vorsteht, um die genannte Stange (7) teilweise zu bedecken, wobei die genannte Stange (7) bei ihrem axialen Hin- und Hergang im Inneren der genannten hohlzylindrischen Führung (13) von Messingstücken (15) geführt wird.

9. Baumschüttler (1) nach Anspruch 8, wobei die genannte hohlzylindrische Führung (13) durch Festschrauben einer Platte (17), die mit der genannten Führung einstückig ist, an der vorderen Wand des genannten Gehäuses befestigt ist, über das genannte Gehäuse (3) hinaus vorsteht, um die genannte Stange (7) teilweise zu bedecken, und mit einer einen Dichtungsring (33) für die genannte Stange enthaltenden Mutter (31) endet.

10. Baumschüttler (1) nach Anspruch 8 oder 9, wobei der genannte erste Teil (27a) des genannten Handgriffs (27) einen kreisförmigen Innenquerschnitt hat und auf der genannten hohlzylindrischen Führung (13) angebracht ist.

11. Baumschüttler (1) nach einem der Ansprüche 1 bis 10, wobei der genannte vordere Handgriff (17) aus zwei zum Beispiel durch Schrauben (41) aneinander festgespannten Halbschalen besteht, die einen im Wesentlichen halbkreisförmigen Querschnitt haben.

12. Baumschüttler (1) nach Anspruch 9, wobei an der genannten Führung (13) Dämpfungsmittel (35, 37) vorgesehen sind, die mit der genannten Platte (17) und der genannten Mutter (31) in Verbindung sind.

13. Baumschüttler (1) nach Anspruch 12, wobei die genannten Dämpfungsmittel elastische Stopfen (35, 37) aufweisen.

14. Baumschüttler (1) nach einem der Ansprüche 1 bis 13, wobei der genannte Handgriff (27) einen aus einem elastomeren Material hergestellten äußeren Antirutschbelag hat.

## Revendications

1. Dispositif pour secouer des arbres (1), comprenant :
- une tige à mouvement alternatif (7) entraînée par moteur (5), animée d'un mouvement alternatif et pourvue, à son extrémité, d'un crochet (9) destiné à coopérer avec la branche d'un arbre;
- une poignée arrière (19);
- une poignée avant (27) disposée autour de ladite tige à mouvement alternatif (7), ladite tige (7) coulissant axialement librement par rapport à ladite poignée avant (27) ;
**caractérisé en ce que** ladite poignée avant (27) comprend une coque ayant un profil sensiblement cylindrique, dotée d'une première partie (27a) ayant un diamètre plus petit et d'une seconde partie (27b) ayant un diamètre plus grand, lesdites première et seconde parties (27a, 27b) de ladite poignée avant (27) étant reliées par une partie tronconique (27c), et **en ce qu'**un curseur (29) d'un seul tenant avec ladite tige (7) ou avec ladite poignée avant (27) est interposé entre ladite poignée avant (27) et ladite tige à mouvement alternatif (7) et permet le déplacement coulissant relatif entre ladite tige à mouvement alternatif (7) et ladite poignée avant (27), ledit curseur (29) comprenant une surface de coopération coopérant avec ladite poignée avant (27) ou avec ladite tige (7) qui empêche une rotation entre ladite tige (7) et ladite poignée avant (27), ledit curseur (29) étant interposé entre ladite poignée avant (27) et ladite tige au niveau de ladite seconde partie (27b) de ladite poignée avant (27) de façon à réduire la transmission de vibrations de ladite tige (7) à ladite poignée avant (27).

2. Dispositif pour secouer des arbres (1) selon la revendication 1, dans lequel, pendant le mouvement alternatif axial de ladite tige (7), ledit curseur (29) se déplace à l'intérieur de ladite poignée (27).

3. Dispositif pour secouer des arbres (1) selon la revendication 1 ou 2, dans lequel ledit curseur (29) est conçu d'un seul tenant avec ladite tige (7) ou ladite poignée (27).

4. Dispositif pour secouer des arbres (1) selon la revendication 1, dans lequel ledit curseur (29) est d'un seul tenant avec ladite tige à mouvement alternatif (7) et a une section transversale polygonale, et dans lequel ladite poignée (27) comprend au moins une partie (27b) ayant une section transversale intérieure polygonale correspondante.

5. Dispositif pour secouer des arbres (1) selon la revendication 4, dans lequel ledit curseur (29) a une section transversale rectangulaire ou carrée et ladite au moins une partie (27b) de ladite poignée (27) a une section transversale rectangulaire ou carrée.

6. Dispositif pour secouer des arbres (1) selon la revendication 1, comprenant un carter (3) logeant un engrenage réducteur à l'intérieur de ce dernier, qui peut être entraîné par ledit moteur (5), afin de transmettre ledit mouvement alternatif axial à ladite tige à mouvement alternatif (7).

7. Dispositif pour secouer des arbres (1) selon la revendication 6, comprenant en outre une liaison d'accouplement (6) interposée entre ledit engrenage réducteur et ladite tige à mouvement alternatif (7) pour permettre la rotation de ladite tige (7) autour de son propre axe.

8. Dispositif pour secouer des arbres (1) selon la revendication 6 ou 7, dans lequel un guide cylindrique creux (13) est prévu, lequel est d'un seul tenant avec ledit carter (3) et fait saillie au-delà de ce dernier à des fins de couvrir partiellement ladite tige (7), ladite tige (7) étant guidée par des coussinets (15) dans son mouvement alternatif axial à l'intérieur dudit guide cylindrique creux (13).

9. Dispositif pour secouer des arbres (1) selon la revendication 8, dans lequel ledit guide cylindrique creux (13) est fixé audit carter (3) par vissage d'une plaque (17) d'un seul tenant avec ledit guide sur la paroi avant dudit carter, fait saillie au-delà dudit carter (3) à des fins de couvrir partiellement ladite tige (7) et se termine par un écrou (31) contenant un anneau d'étanchéité (33) destiné à ladite tige.

10. Dispositif pour secouer des arbres (1) selon la revendication 8 ou 9, dans lequel ladite première partie (27a) de ladite poignée (27) a une section transversale intérieure circulaire et est ajustée sur ledit guide cylindrique creux (13).

11. Dispositif pour secouer des arbres (1) selon l'une quelconque des revendications 1 à 10, dans lequel ladite poignée avant (27) est constituée de deux demies coques ayant une section transversale sensiblement cylindrique, serrées l'une contre l'autre, par exemple au moyen de vis (41).

12. Dispositif pour secouer des arbres (1) selon la revendication 9, dans lequel des moyens d'amortissement (35, 37) sont disposés sur ledit guide (13) respectivement en correspondance avec ladite plaque (17) et ledit écrou (31).

13. Dispositif pour secouer des arbres (1) selon la revendication 12, dans lequel lesdits moyens d'amortissement comprennent des tampons élastiques (35, 37).

14. Dispositif pour secouer des arbres (1) selon l'une quelconque des revendications 1 à 13, dans lequel ladite poignée (27) comporte un revêtement extérieur antiglissant en matériau élastomère.
